# EUROPEAN PATENT APPLICATION

(11) **EP 2 750 339 A1**
(43) Date of publication of application: **02.07.2014**
(21) Application number: 12828422.1
(22) Date of filing: 01.08.2012
(51) Int. Cl.: H04L 12/70

(54) **SYNCHRONIZATION METHOD AND SYSTEM FOR TRAVERSING THE SYNCHRONOUS NETWORK OF THIRD-PARTY**

(30) Priority: 26.08.2011 CN 201110249242
(71) Applicant: ZTE Corporation, Shenzhen, Guangdong 518057 (CN)
(72) Inventor: ZHANG, Junhui, Shenzhen Guangdong 518057 (CN); QU, Yanfeng, Shenzhen Guangdong 518057 (CN)
(74) Representative: Bugnion Genève
(86) International application number: PCT/CN2012/079493
(87) International publication number: WO 2013/029453

(57) **Abstract**

A synchronization method and system for traversing a third-party synchronous network, includes configuring a 1588 Transparent Clock (TC) traversing mode at an ingress edge device and an egress edge device of the third-party synchronous network, and synchronizing between the ingress edge device and the egress edge device; and transparently transmitting a Precision Time Protocol (PTP) message which needs to traverse the third-party synchronous network in the third-party synchronous network, and when the transparently transmitted PTP message reaches the egress edge device, correcting a correctionField of the PTP message according to a delay in the network, and transmitting the PTP message from the egress edge device to the next level device. The above technical scheme solves the 1588 TC problem of traversing the third-party synchronous network, synchronization only needs to be implemented at the edge devices of the third-party network, the routing protocol does not need to be extended, an intermediate network device does not need to support the TC either, thereby greatly reducing the complexity of implementation and operational costs.

## Description

### Technical Field

The present document relates to the field of 1588 protocol technologies, and in particular, to a method and system for traversing a third-party synchronous network.

### Background of the Related Art

With the rapid development of the network of the 3rd Generation (3G) mobile communication technology, more and more attention is paid on the 1588 time synchronization which is widely used in communication networks. Domestic and foreign operators continue to use the 1588 protocol for time synchronization, which gradually replaces the means of using the Global Position System (GPS) for time synchronization.

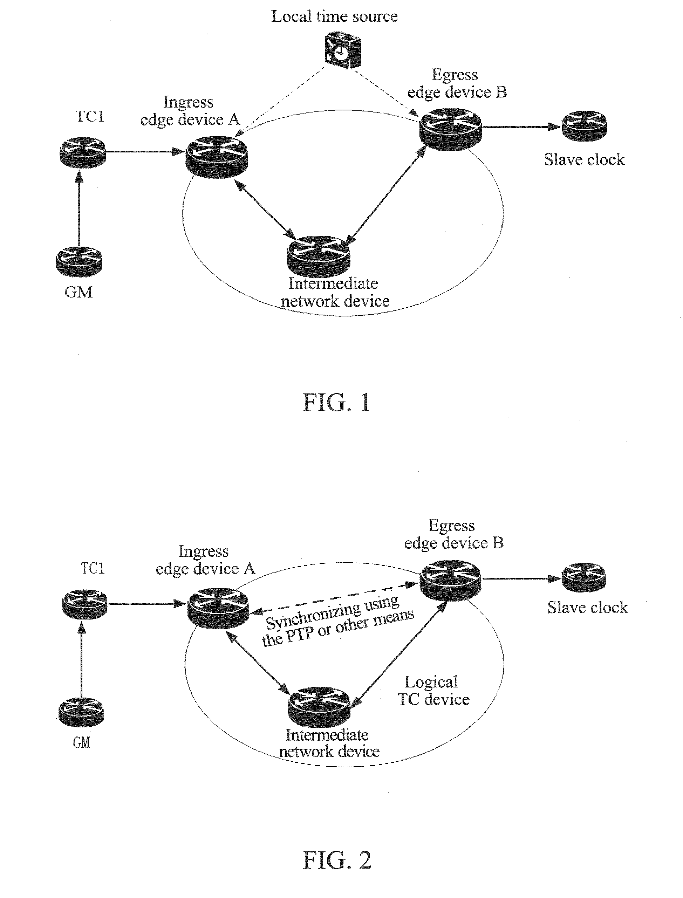

As shown in Fig. 1, the ITU-G G.8265 proposes the concept of management domains of a packet synchronous network, i.e., dividing the packet synchronous network into different management domains, different management domains have different clocks, and the Precision Timing Protocol (PTP) messages between a master clock and a slave clock allow to implement a synchronization across the management domain of the third-party synchronous network of other operators. However, since intermediate devices of other operator networks may not support the PTP, it results in existence of vibration when the PTP packet messages traverse the third-party synchronous network, and if the vibration is overlarge, it will influence the performance of clock recovery of the slave device. Therefore, how to filter the Packet Delay Variation (PDV) noise caused by the intermediate network devices is a problem needed to be solved urgently.

In IETF TICTOC working group, a draft named draft-davari-tictoc-1588overmpls describes the application scenarios and implementation technologies of 1588 over MPLS, and it proposes the extension of routing protocols to perform 1588 capability notification, and selects a forwarding path based on Label Switching Path (LSP) of the PTP. However, this scheme needs to modify the related routing protocols to establish a dedicated PTP LSP, and in addition, the intermediate network devices is also needed to identify the PTP packet so as to correct the timestamp, thereby resulting in that the implementation technology of this scheme is complex and the upgrade cost is high; and in addition, this scheme also damages the hierarchical structure of the Multi-Protocol Label Switching (MPLS) network.

### Summary of the Invention

The technical problem to be solved by the embodiments of the present document is to provide a synchronization method and system for traversing a third-party synchronous network, so as to implement the 1588 TC clock.

In order to solve the above technical problem, the embodiments of the present document use the following technical schemes.

A synchronization method for traversing a third-party synchronous network, comprises:
configuring a 1588 Transparent Clock (TC) traversing mode at an ingress edge device and an egress edge device of the third-party synchronous network, and synchronizing between the ingress edge device and the egress edge device; and
transparently transmitting a Precision Time Protocol (PTP) message which needs to traverse the third-party synchronous network in the third-party synchronous network, and when the transparently transmitted PTP message reaches the egress edge device, correcting a correctionField of the PTP message according to a delay in the network, and transmitting the PTP message from the egress edge device to a next level device.

Alternatively, the step of transparently transmitting a PTP message which needs to traverse the third-party synchronous network in the third-party synchronous network comprises:
when the PTP message is received from an ingress port of the ingress edge device, the ingress edge device identifying whether the received PTP message needs to traverse the third-party network according to a user configuration, and if yes, the ingress edge device recording an ingress timestamp when the PTP message reaches the ingress port of the ingress edge device, and after adding the ingress timestamp into the PTP message, transparently transmitting the PTP message in the third-party synchronous network; and
when the egress edge device receives the PTP message, determining whether the PTP message is a normal PTP message or a transparently transmitted PTP message according to whether the ingress timestamp is added in the PTP message.

Alternatively, the step of when the transparently transmitted PTP message reaches the egress edge device, correcting a correctionField of the PTP message according to a delay in the network and transmitting the PTP message from the egress edge device to a next level device comprises:
when the egress edge device determines that the received PTP message is a transparently transmitted PTP message, recording an egress timestamp when the PTP message reaches the egress edge device, and subtracting the ingress timestamp in the PTP message from the recorded egress timestamp to obtain the delay in the network, and correcting the correctionField according to the obtained delay in the network.

Alternatively, the step of when the transparently transmitted PTP message reaches the egress edge device, correcting a correctionField of the PTP message according to a delay in the network and transmitting the PTP message from the egress edge device to a next level device further comprises:
after correcting the correctionField, the egress edge device deleting the ingress timestamp in the transparently transmitted PTP message, and transmitting the PTP message from the egress port of the egress edge device to the next level device.

Alternatively, the step of when the transparently transmitted PTP message reaches the egress edge device, correcting a correctionField of the PTP message according to a delay in the network and transmitting the PTP message from the egress edge device to a next level device comprises:
when the egress edge device determines that the received PTP message is a normal PTP message, transmitting the PTP message from the egress port of the egress edge device to the next level device after correcting the correctionField according to a delay in the egress edge device.

Alternatively, the step of synchronizing between the ingress edge device and the egress edge device comprises:
synchronizing between the ingress edge device and the egress edge device by means of the PTP, a Network Time Protocol (NTP) or a local clock source.

A synchronization system for traversing a third-party synchronous network, comprises an ingress edge device and an egress edge device of the third-party synchronous network, wherein, the ingress edge device includes an ingress 1588 Transparent Clock (TC) traversing module and an ingress synchronizing module, and the egress edge device includes an egress 1588 TC traversing module and an egress synchronizing module, wherein,
the ingress synchronizing module is configured to implement the synchronization between the ingress edge device and the egress edge device in cooperation with the egress synchronizing module;
the ingress 1588 TC traversing module is configured to transparently transmit a received Precision Time Protocol (PTP) message in the third-party synchronous network; and
the egress 1588 TC traversing module is configured to when the transparently transmitted PTP message reaches the egress edge device, correct a correctionField according to a delay in the network, and transmit the PTP message from the egress edge device to a next level device.

Alternatively, the ingress 1588 TC traversing module is configured to transparently transmit the received PTP message in the third-party synchronous network by the following mode:
when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

Alternatively, the egress 1588 TC traversing module is configured to when the transparently transmitted PTP message reaches the egress edge device, correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
   if the PTP message is a transparently transmitted PTP message, recording an egress timestamp when the PTP message reaches an egress port of the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
   if the PTP message is a normal PTP message, transmitting the PTP message from the egress port of the egress edge device to the next level device after correcting the correctionField according to a delay in the egress edge device.

Alternatively, the ingress synchronizing module is configured to implement the synchronization between the ingress edge device and the egress edge device in cooperation with the egress synchronizing module by the following mode:
synchronizing between the ingress edge device and the egress edge device by means of the PTP, a Network Time Protocol (NTP) or a local clock source in cooperation with the egress synchronizing module.

An ingress edge device located in a third-party synchronous network, comprises an ingress 1588 Transparent Clock (TC) traversing module and an ingress synchronizing module, wherein,
the ingress synchronizing module is configured to implement the synchronization between an ingress edge device and an egress edge device in cooperation with an egress synchronizing module of the egress edge device; and
the ingress 1588 TC traversing module is configured to transparently transmit a received Precision Time Protocol (PTP) message in the third-party synchronous network.

Alternatively, the ingress 1588 TC traversing module is configured to transparently transmit the received PTP message in the third-party synchronous network by the following mode:
when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

Alternatively, the ingress synchronizing module is configured to implement the synchronization between the ingress edge device and the egress edge device in cooperation with the egress synchronizing module of the egress edge device by the following mode:
synchronizing between the ingress edge device and the egress edge device by means of the PTP, a Network Time Protocol (NTP) or a local clock source in cooperation with the egress synchronizing module.

An egress edge device located in a third-party synchronous network, comprises an egress 1588 Transparent Clock (TC) traversing module and an egress synchronizing module, wherein,
the egress synchronizing module is configured to implement the synchronization between an ingress edge device and the egress edge device in cooperation with an ingress synchronizing module of the ingress edge device; and
the egress 1588 TC traversing module is configured to when a transparently transmitted PTP message reaches the egress edge device, correct a correctionField according to a delay in the network, and transmit the PTP message from the egress edge device to a next level device.

Alternatively, the egress 1588 TC traversing module is configured to when the transparently transmitted PTP message reaches the egress edge device, correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
   if the PTP message is a transparently transmitted PTP message, recording an egress timestamp when the PTP message reaches the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
   if the PTP message is a normal PTP message, after correcting the correctionField according to a delay in the egress edge device, transmitting the PTP message from the egress port of the egress edge device to the next level device.

Alternatively, the egress synchronizing module is configured to implement the synchronization between the ingress edge device and the egress edge device in cooperation with an ingress synchronizing module of the ingress edge device by the following mode:
synchronizing between the ingress edge device and the egress edge device by means of the PTP, a Network Time Protocol (NTP) or a local clock source in cooperation with the ingress synchronizing module.

With the above technical schemes, the 1588 TC problem of traversing the third-party synchronous network is solved, synchronization only needs to be achieved between the edge devices of the third-party network, an intermediate network device does not need to identify and process the PTP messages, and does not need to perform synchronization; and compared with the related technology, the scheme of the present document is easy to implement, the routing protocol does not need to be extended, the intermediate network device does not need to support the TC either, thereby greatly reducing the complexity of implementation and operational costs.

### Brief Description of Drawings

The accompanying drawings described herein are used to provide a better understanding of the present document and constitute a part of this application, and the schematic embodiments of the present document and the descriptions thereof are used to explain the present document and do not constitute a improper definition of the present document. In the accompanying drawings:
Fig. 1 is a diagram of traversing a third-party network to implement 1588 clock synchronization in the related technology;
Fig. 2 is a diagram of traversing a third-party network to implement 1588 TC according to an embodiment of the present document;
Fig. 3 is a diagram of traversing multiple management regions to implement 1588 TC according to another embodiment of the present document; and
Fig. 4 is an illustrative block diagram of a synchronization system for traversing a third-party synchronous network according to an embodiment of the present document.

### Preferred Embodiments of the Invention

The present embodiment provides a time/clock synchronization scheme, wherein, a third-party synchronous network is treated as one Transparent Clock (TC) device, and two edge devices of the third-party synchronous network are treated as an logical TC ingress and an logical TC egress respectively; and the synchronization only needs to be implemented between the edge devices of the third-party synchronous network, and the synchronization does not need to be implemented at an intermediate network device.

Wherein, the present embodiment provides a synchronization method for traversing a third-party synchronous network, which uses the following technical scheme:
configuring a 1588 TC traversing mode at an ingress edge device and an egress edge device of the third-party synchronous network, and synchronizing between the ingress edge device and the egress edge device; and
transparently transmitting a PTP message which needs to traverse the third-party synchronous network in the third-party synchronous network, and when the transparently transmitted PTP message reaches the egress edge device, correcting a correctionField of the PTP message according to a delay in the network, and transmitting the PTP message from the egress edge device to the next level device.

Wherein, synchronization can be implemented between the ingress edge device and the egress edge device by means of the PTP, a Network Time Protocol (NTP) or a local clock source etc.

Alternatively, the step of configuring a 1588 TC traversing mode at an ingress edge device and an egress edge device comprises:
when the PTP message is received from an ingress port of the ingress edge device, the ingress edge device identifying whether the received PTP message needs to traverse the third-party network (for example, it can identify whether the received PTP message is a message which needs to traverse or a normal message according to a user configuration), and if yes, recording an internal timestamp of the ingress edge device (i.e., the time when the PTP message reaches the ingress port of the ingress edge device) as an ingress timestamp, and after adding the ingress timestamp into the PTP message, transparently transmitting the PTP message in the third-party synchronous network; and
when the egress edge device receives the PTP message, determining whether the PTP message is a normal PTP message or a transparently transmitted PTP message according to whether the ingress timestamp is added in the PTP message.

Alternatively, when the egress edge device determines that the received PTP message is a transparently transmitted PTP message, an egress timestamp when the PTP message reaches the egress edge device is recorded, and after subtracting the ingress timestamp in the PTP message from the recorded egress timestamp to obtain the delay in the network, the correctionField is corrected according to the delay in the network.

Alternatively, after correcting the correctionField, the egress edge device deletes the ingress timestamp in the transparently transmitted PTP message, and transmits the PTP message from the egress port of the egress edge device to the next level device.

Alternatively, when the egress edge device determines that the received PTP message is a normal PTP message, it transmits the PTP message from the egress port of the egress edge device to the next level device after correcting the correctionField according to a delay in the egress edge device.

In order to make the purpose, technical schemes and advantages of the present document more clear and apparent, the embodiments of the present document will be described in detail in conjunction with accompanying drawings hereinafter. It should be illustrated that without conflict, the embodiments in the application and the features in the embodiments can be combined with each other randomly.

### Embodiment one

As shown in Fig. 2, the specific procedure of clock synchronization for traversing a third-party synchronous network according to the present embodiment mainly comprises the following steps.

In step one, time synchronization is performed at edge devices (which are assumed to be ingress device A and egress device B) at two sides of the third-party synchronous network (also a third-party network for short herein);
in step two, a particular 1588 TC traversing mode is configured at the PTP ingress port of the network edge device A, to be distinguished from a normal 1588 TC;
in step three, when the PTP message enters from this PTP port of a device A, the device A identifies the PTP message, and adds an internal timestamp TS1 of the device A into the PTP message, and at this time, the normal PTP message becomes an extensional PTP message;
in step four, the PTP message is transparently transmitted and processed in the third-party network, i.e., an intermediate network device does not need to identify the PTP message, and also needs not to correct the timestamp, and the PTP only needs to be forwarded directly; and in addition, the intermediate network device also does not need to be synchronized;
in step five, when the PTP message reaches the egress device B, it needs to identify whether the PTP message is a normal PTP message or an extensional PTP message; and for the normal PTP message, the correctionField is corrected according to a delay in the device B;
in step six, for the extensional PTP message, the correctionField is corrected according to a delay in the network; i.e., recording an egress timestamp TS2 at the PTP egress port, and subtracting TS1 from the egress timestamp TS2, to obtain the delay introduced in the network; and finally the correctionField of the PTP message is corrected; and
in step seven, after the correctionField is corrected, the timestamp in the extensional PTP message is deleted, so that the PTP message becomes a normal PTP message, and is transmitted from the egress port to the next level device to be processed.

In the present embodiment, the format of the PTP message is extended to record the timestamp when the PTP message reaches the ingress device of the third-party synchronous network by adding one field.

### Embodiment two

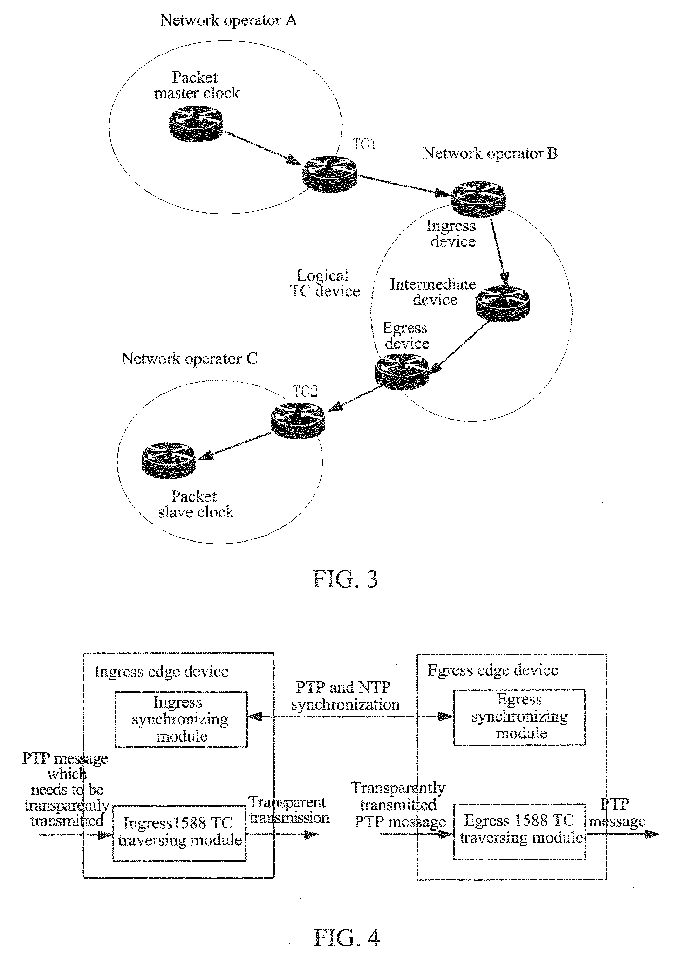

The present embodiment describes a process of traversing multiple intermediate network devices to implement 1588 TC. As shown in Fig. 3, the process thereof is described as follows.

A packet network is divided into different management domains, and the divided management domains include an operator A, an operator B and an operator C, and each management domain has a locally independent reference source and implements a synchronization;
a mater clock of the network operator A needs to transmit a timing flow to a slave device of a network of the operator C through a network of the operator B, wherein, the network of the operator B is treated as one logical TC device;
for a TC1 device of the operator A, the PTP message is processed in accordance with a related standard procedure;
the network of the operator B is treated as a logical TC device, and the above described embodiment one refers to the specific traversing procedure;
for a TC2 device of the operator C, the PTP message is processed in accordance with a related standard procedure;
the slave device of the operator C receives the PTP message, and PTP message is processed in accordance with a related standard procedure, so as to implement the PTP synchronization of multiple management domains.

It can be seen from the above description that the scheme of the present document does not need the extension of related routing protocols, does not need to upgrade and update the intermediate device of the related third-party synchronous network either, and it is easy to implement, and has a lower cost, and the upgrade of the network devices is convenient.

As shown in Fig. 4, the embodiments of the present document further provide a synchronization system for traversing a third-party synchronous network, comprising an ingress edge device and an egress edge device of the third-party synchronous network, wherein, the ingress edge device includes an ingress 1588 TC traversing module and an ingress synchronizing module, and the egress edge device includes an egress 1588 TC traversing module and an egress synchronizing module, wherein,
the ingress synchronizing module is configured to implement the synchronization between the ingress edge device and the egress edge device in cooperation with the egress synchronizing module;
the ingress 1588 TC traversing module is configured to transparently transmit the received PTP message in the third-party synchronous network; and
the egress 1588 TC traversing module is configured to when the transparently transmitted PTP message reaches the egress edge device, correct a correctionField according to a delay in the network, and transmit the PTP message from the egress edge device to the next level device.

Alternatively, the ingress 1588 TC traversing module is configured to transparently transmit the received PTP message in the third-party synchronous network by the following mode: when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

Alternatively, the egress 1588 TC traversing module is configured to correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
if the PTP message is a transparently transmitted PTP message, recording an egress timestamp when the PTP message reaches an egress port of the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
if the PTP message is a normal PTP message, transmitting the PTP message from the egress port of the egress edge device to the next level device after correcting the correctionField according to a delay in the egress edge device.

Alternatively, the ingress synchronizing module is configured to synchronize between the ingress edge device and the egress edge device by means of the PTP, a NTP or a local clock source in cooperation with the egress synchronizing module.

The embodiments of the present document further provide an ingress edge device located in a third-party synchronous network as shown in Fig. 4, comprising an ingress 1588 TC traversing module and an ingress synchronizing module, wherein,
the ingress synchronizing module is configured to implement the synchronization between an ingress edge device and an egress edge device in cooperation with an egress synchronizing module of the egress edge device; and
the ingress 1588 TC traversing module is configured to transparently transmit the received PTP message in the third-party synchronous network.

Alternatively, the ingress 1588 TC traversing module is configured to transparently transmit the received PTP message in the third-party synchronous network by the following mode:
when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

Alternatively, the ingress synchronizing module is configured to implement the synchronization between the ingress edge device and the egress edge device in cooperation with the egress synchronizing module of the egress edge device by the following mode:
synchronizing between the ingress edge device and the egress edge device by means of the PTP, a NTP or a local clock source in cooperation with the egress synchronizing module.

The embodiments of the present document further provide an egress edge device located in a third-party synchronous network as shown in Fig. 4, comprising an egress 1588 TC traversing module and an egress synchronizing module, wherein,
the egress synchronizing module is configured to implement the synchronization between an ingress edge device and the egress edge device in cooperation with an ingress synchronizing module of the ingress edge device; and
the egress 1588 TC traversing module is configured to when the transparently transmitted PTP message reaches the egress edge device, correct a correctionField according to a delay in the network, and transmit the PTP message from the egress edge device to the next level device.

Alternatively, the egress 1588 TC traversing module is configured to when the transparently transmitted PTP message reaches the egress edge device, correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
   if the PTP message is a transparently transmitted PTP message, recording an egress timestamp when the PTP message reaches the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
   if the PTP message is a normal PTP message, after correcting the correctionField according to a delay in the egress edge device, transmitting the PTP message from the egress port of the egress edge device to the next level device.

Alternatively, the egress synchronizing module is configured to implement the synchronization between the ingress edge device and the egress edge device in cooperation with an ingress synchronizing module of the ingress edge device by the following mode:
synchronizing between the ingress edge device and the egress edge device by means of the PTP, a NTP or a local clock source in cooperation with the ingress synchronizing module.

The above description is only the preferred embodiments of the present document and it is not intended to limit the present document, the present document can also have a variety of other embodiments. Without departing from the spirit and essence of the present document, those skilled in the art can make various corresponding changes and variations based on the present document, but all these changes and variations should belong to the protection scope of the appended claims in the present document.

Obviously, those skilled in the art should understand that all modules or all steps aforementioned of the present document can be implemented with general computing systems, and can be integrated in a single computing system, or distributed onto a network consisting of a plurality of computing systems; alternatively, they can be implemented with program codes executable by the computing systems, and therefore, they can be stored in storage systems to be executed by the computing systems; and in some cases, the steps illustrated or described can be implemented by an order different from what is described here, or they are respectively made into a plurality of integrated circuit modules; or several modules or steps thereof are made into a single integrated circuit module to be implemented. Thus, the present document is not limited to any specific combinations of hardware and software.

### Industrial Applicability

With the above technical schemes, the 1588 TC problem of traversing the third-party synchronous network is solved, the synchronization only needs to be implemented between the edge devices of the third-party network, an intermediate network device does not need to identify and process the PTP messages, and the synchronization also does not need to be implemented; and compared with the related technology, the scheme of the present document is easy to implement, does not need the extension of the routing protocols, does not need the capability of the intermediate network device supporting the TC either, thereby greatly reducing the complexity of implementation and operational costs. Therefore, the present document has strong industry applicability.

## Claims

1. A synchronization method for traversing a third-party synchronous network, comprising:
configuring a 1588 Transparent Clock (TC) traversing mode at an ingress edge device and an egress edge device of the third-party synchronous network, and synchronizing between the ingress edge device and the egress edge device; and
transparently transmitting a Precision Time Protocol (PTP) message which needs to traverse the third-party synchronous network in the third-party synchronous network, and when the transparently transmitted PTP message reaches the egress edge device, correcting a correctionField of the PTP message according to a delay in the network, and transmitting the PTP message from the egress edge device to a next level device.

2. The synchronization method according to claim 1, wherein, the step of transparently transmitting the PTP message which needs to traverse the third-party synchronous network in the third-party synchronous network comprises:
when the PTP message is received from an ingress port of the ingress edge device, the ingress edge device identifying whether the received PTP message needs to traverse the third-party network according to a user configuration, and if yes, the ingress edge device recording an ingress timestamp when the PTP message reaches the ingress port of the ingress edge device, and after adding the ingress timestamp into the PTP message, transparently transmitting the PTP message in the third-party synchronous network; and
when the egress edge device receives the PTP message, determining whether the PTP message is a normal PTP message or a transparently transmitted PTP message according to whether the ingress timestamp is added in the PTP message.

3. The synchronization method according to claim 2, wherein, the step of when the transparently transmitted PTP message reaches the egress edge device, correcting a correctionField of the PTP message according to a delay in the network and transmitting the PTP message from the egress edge device to a next level device comprises:
when the egress edge device determines that the received PTP message is a transparently transmitted PTP message, recording an egress timestamp when the PTP message reaches the egress edge device, and subtracting the ingress timestamp in the PTP message from the recorded egress timestamp to obtain the delay in the network, and correcting the correctionField according to the obtained delay in the network.

4. The synchronization method according to claim 2 or 3, wherein, the step of when the transparently transmitted PTP message reaches the egress edge device, correcting a correctionField of the PTP message according to a delay in the network and transmitting the PTP message from the egress edge device to a next level device further comprises:
after correcting the correctionField, the egress edge device deleting the ingress timestamp in the transparently transmitted PTP message, and transmitting the PTP message from the egress port of the egress edge device to the next level device.

5. The synchronization method according to claim 2, wherein, the step of when the transparently transmitted PTP message reaches the egress edge device, correcting a correctionField of the PTP message according to a delay in the network and transmitting the PTP message from the egress edge device to a next level device comprises:
when the egress edge device determines that the received PTP message is a normal PTP message, transmitting the PTP message from the egress port of the egress edge device to the next level device after correcting the correctionField according to a delay in the egress edge device.

6. The synchronization method according to claim 1, wherein, the step of synchronizing between the ingress edge device and the egress edge device comprises:
synchronizing between the ingress edge device and the egress edge device by means of the PTP, a Network Time Protocol (NTP) or a local clock source.

7. A synchronization system for traversing a third-party synchronous network, comprising an ingress edge device and an egress edge device of the third-party synchronous network, wherein, the ingress edge device includes an ingress 1588 Transparent Clock (TC) traversing module and an ingress synchronizing module, and the egress edge device includes an egress 1588 TC traversing module and an egress synchronizing module, wherein,
the ingress synchronizing module is configured to implement a synchronization between the ingress edge device and the egress edge device in cooperation with the egress synchronizing module;
the ingress 1588 TC traversing module is configured to transparently transmit a received Precision Time Protocol (PTP) message in the third-party synchronous network; and
the egress 1588 TC traversing module is configured to when the transparently transmitted PTP message reaches the egress edge device, correct a correctionField according to a delay in the network, and transmit the PTP message from the egress edge device to a next level device.

8. The synchronization system according to claim 7, wherein, the ingress 1588 TC traversing module is configured to transparently transmit the received PTP message in the third-party synchronous network by the following mode:
when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

9. The synchronization system according to claim 8, wherein, the egress 1588 TC traversing module is configured to when the transparently transmitted PTP message reaches the egress edge device, correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
if the PTP message is a transparently transmitted PTP message, recording an egress timestamp when the PTP message reaches an egress port of the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
if the PTP message is a normal PTP message, transmitting the PTP message from the egress port of the egress edge device to the next level device after correcting the correctionField according to a delay in the egress edge device.

10. The synchronization system according to claim 7, wherein, the ingress synchronizing module is configured to implement the synchronization between the ingress edge device and the egress edge device in cooperation with the egress synchronizing module by the following mode:
synchronizing between the ingress edge device and the egress edge device by means of the PTP, a Network Time Protocol (NTP) or a local clock source in cooperation with the egress synchronizing module.

11. An ingress edge device located in a third-party synchronous network, comprising an ingress 1588 Transparent Clock (TC) traversing module and an ingress synchronizing module, wherein,
the ingress synchronizing module is configured to implement a synchronization between an ingress edge device and an egress edge device in cooperation with an egress synchronizing module of the egress edge device; and
the ingress 1588 TC traversing module is configured to transparently transmit a received Precision Time Protocol (PTP) message in the third-party synchronous network.

12. The ingress edge device according to claim 11, wherein, the ingress 1588 TC traversing module is configured to transparently transmit the received PTP message in the third-party synchronous network by the following mode:
when the PTP message is received from an ingress port of the ingress edge device, identifying whether the received PTP message needs to traverse the third-party network according to a user configuration, and if yes, recording an ingress timestamp when the PTP message reaches the ingress port of the ingress edge device, and after adding the ingress timestamp into the PTP message, transparently transmitting the PTP message in the third-party synchronous network.

13. The ingress edge device according to claim 11 or 12, wherein, the ingress synchronizing module is configured to implement the synchronization between the ingress edge device and the egress edge device in cooperation with the egress synchronizing module of the egress edge device by the following mode:
synchronizing between the ingress edge device and the egress edge device by means of the PTP, a Network Time Protocol (NTP) or a local clock source in cooperation with the egress synchronizing module.

14. An egress edge device located in a third-party synchronous network, comprising an egress 1588 Transparent Clock (TC) traversing module and an egress synchronizing module, wherein,
the egress synchronizing module is configured to implement a synchronization between an ingress edge device and the egress edge device in cooperation with an ingress synchronizing module of the ingress edge device; and
the egress 1588 TC traversing module is configured to when a transparently transmitted PTP message reaches the egress edge device, correct a correctionField according to a delay in the network, and transmit the PTP message from the egress edge device to a next level device.

15. The egress edge device according to claim 14, wherein, the egress 1588 TC traversing module is configured to when the transparently transmitted PTP message reaches the egress edge device, correct a correctionField according to a delay in the network and transmit the PTP message from the egress edge device to the next level device by the following mode:
when the PTP message is received, determining whether the PTP message is a normal PTP message or a transparently transmitted PTP message according to whether the ingress timestamp is added in the PTP message:
if the PTP message is a transparently transmitted PTP message, recording an egress timestamp when the PTP message reaches the egress edge device, and subtracting the ingress timestamp in the PTP message from the recorded egress timestamp to obtain the delay in the network, and correcting the correctionField according to the obtained delay in the network; and after the correctionField is corrected, deleting the ingress timestamp in the transparently transmitted PTP message, and transmitting the PTP message from the egress port of the egress edge device to the next level device; and
if the PTP message is a normal PTP message, after correcting the correctionField according to a delay in the egress edge device, transmitting the PTP message from the egress port of the egress edge device to the next level device.

16. The egress edge device according to claim 14 or 15, wherein, the egress synchronizing module is configured to implement the synchronization between the ingress edge device and the egress edge device in cooperation with an ingress synchronizing module of the ingress edge device by the following mode:
synchronizing between the ingress edge device and the egress edge device by means of the PTP, a Network Time Protocol (NTP) or a local clock source in cooperation with the ingress synchronizing module.
